# EUROPEAN PATENT SPECIFICATION

(11) **EP 0 520 719 B1**
(45) Date of publication and mention of the grant of the patent: **29.05.1996**
(21) Application number: 92305694.9
(22) Date of filing: 22.06.1992
(51) Int. Cl.: F16F 15/32, F16C 3/02

(54) **Counterweight attachment technique**
Ausgleichgewichtsbefestigungstechnik
Technique de fixation de contre-poids

(30) Priority: 25.06.1991 US 720225
(43) Date of publication of application: 30.12.1992
(73) Proprietor: DANA CORPORATION, Toledo, OH 43615 (US)
(72) Inventor: Rhoda, Donald A., Toledo, OH 43623 (US); Dutkiewiz, Jeffrey A., Toledo, OH 43615 (US); Gould, Jerry E., Columbus, OH 43212 (US); Cox, Anthony M., W. Henrietta, N.Y. 14586 (US)
(74) Representative: Cheyne, John Robert Alexander Mackenzie

(56) References cited:
- EP-A- 0 081 615
- EP-A- 0 106 262
- DE-A- 3 140 368
- GB-A- 2 147 388
- PATENT ABSTRACTS OF JAPAN vol. 10, no. 365 (M-542)(2422) 6 December 1986 & JP-A-61 159 289 (KOBE STEEL LTD) 18 July 1986

## Description

The present invention relates to use of transition materials and, more particularly, to an apparatus and method for balancing an aluminum drive shaft for rotation about an axis using transition materials.

Often, it is desirable to employ combinations of materials in order to obtain benefits of the properties of each material. For example, drive shafts for vehicles may be developed of aluminum, which offers substantial weight reduction and reduced rotational inertia over steel drive shafts. However, counterweights must be attachable to the shafts in order to properly balance the shafts. The preferred material for these counterweights is steel, since steel has a significantly greater mass density than aluminum and a much larger piece of aluminum would be required to perform as a counterweight if aluminum were used. Hence, it is desired to combine the light weight, heat conductivity, electrical conductivity, and corrosion resistance properties of aluminum with the greater mass density, high strength, and hardness, of steel. However, joining these two materials presents many problems.

One method of joining aluminum and steel is resistance projection welding. The typical resistance projection welding method of joining aluminum to steel, however, is generally considered unfeasible due to formation of undesirable discontinuities or defects along the bond line or weld zone.

Another method of joining aluminum to steel is fusion welding. However, steel and aluminum are of considerably different melting points, making fusion welding difficult. In particular, steel and aluminum form a series of brittle intermetallics. As a result, many problems occur in trying to fusion weld steel aluminum including discontinuities in the weld line, weak welds between two incompatible materials such as steel and aluminum, breakage due to differential expansion and contraction, diffusion forming brittle intermetallic compounds at the interface between the two materials, high stresses due to residual strains from the welding operation, and galvanic couples that cause corrosion.

GB-A-2147388 discloses a method of securing a balance weight to a drive shaft. The generally cylindrical balance weight is formed with a curved end surface which conforms to the outer surface of the drive shaft and has a coaxial aperture formed through it. The balance weight and drive shaft are typically formed of dissimilar metals, such as steel and aluminum. While the balance weight is maintained against the drive shaft at a predetermined location satisfactory for balancing the drive shaft, adhesive material, such as molten aluminum wire, is supplied within the aperture so as form a spot or rivet type weld.

There exists a need for a process of attaching steel to aluminum which overcomes the aforementioned problems, including reducing the amount of heat introduced into the aluminum and, thus, the thermal expansion and deformation of the aluminum during attachment to the steel.

According to a first aspect of the present invention there is provided a metallic composite adapted for attachment to an aluminum drive shaft for imparting mechanical balance to said aluminum drive shaft during rotation thereof, the composite comprising a steel counterweight and a transition material for disposition between the aluminum drive shaft and the counterweight, wherein the transition material comprises a laminate structure having a first, aluminum surface to be placed against the aluminum drive shaft, and a second, steel surface to be placed against the steel counterweight, and in which there are provided one or more intermediate laminate regions between the aluminum surface and the steel surface.

Preferably the transition material is projection welded, which allows for the metering of heat flow from the steel to the aluminum.

An advantage of the use of a transition material during the resistance welding process is the reduction of the amount of heat introduced to the aluminum drive shaft, which reduces the thermal expansion and deformation of the drive shaft during the counterweight attachment. The resistance welding process provides the further advantage of eliminating expulsion from the aluminum and minimizing expulsion from the steel during the welding process.

Using the transition material to attach the steel counterweights to the aluminum drive shaft provides the advantage of reducing the possibility of galvanic corrosion at the aluminum-steel interface.

In a preferred embodiment of the present invention, in which the apparatus is resistance welded, an aluminum-aluminum bond is created between the aluminum drive shaft and the first surface of the transition material from heat lost in the steel during the resistance welding process. Likewise, a steel-steel bond is created between the steel counterweight and the second surface of the transition material from heat generated in the steel counterweight during the resistance welding process. Finally, in a preferred embodiment of the invention, the apparatus may further comprise a plurality of outwardly projecting geometric shapes on the second surface of the transition material to prevent excess heat from being transmitted to the aluminum during the resistance welding process.

According to a second aspect of the present invention, there is provided a method of balancing an aluminum drive shaft, the aluminum drive shaft having an outer surface facing radially away from an axis about which said aluminum drive shaft rotates, the method comprising the steps of:
providing a steel counterweight;
disposing a transition material between the outer surface of the aluminum drive shaft and an inner surface of the steel counterweight; and
applying a resistance welding process to the aluminum drive shaft, the steel counterweight, and the transition material to resistance weld the inner surface of the steel counterweight to the outer surface of the aluminum drive shaft, wherein the transition material has a first surface adjacent to the aluminum drive shaft and a second surface adjacent to the steel counterweight, the first surface being aluminum and the second surface being steel.

For a better understanding of the present invention and to show more clearly how it may be carried into effect, reference will now be made, by way of example, to the accompanying drawings, in which:-
Fig. 1 is a cross-sectional view of the transition material used to attach steel counterweights to aluminum drive shafts; and
Fig. 2 is an exploded view, illustrating a multilayered transition material.

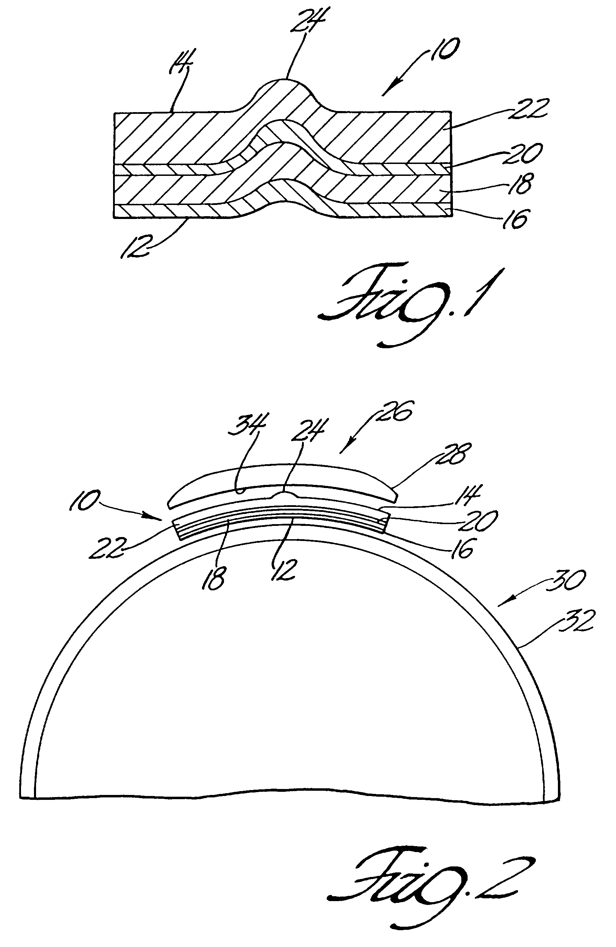

Referring now to the drawings, in Figure 1 there is illustrated a cross sectional view of the layers of a transition material, The transition material, generally designated 10, has a first surface 12 and a second surface 14. Surface 12 is aluminum and surface 14 is steel. The transition material 10 is also comprised of at least two, and preferably four, layers 16, 18, 20, and 22. Layers 16, 18, and 20 are aluminum layers of varying grades. In a preferred embodiment of the present invention, layers 16 and 20 comprise aluminum 1145, and layer 18 comprises aluminum 5052. The fourth layer 22 is a steel layer, preferably low carbon steel such as steel 1008.

Continuing with the drawings, using the transition material 10 permits the attachment of one or more steel counterweights 28 to an aluminum drive shaft 30 by means of a resistance welding process, without encountering the problems faced during resistance welding of steel directly to aluminum. Additionally, the resistance welding process using the transition material 10 eliminates expulsion from the aluminum and minimizes expulsion from the steel. The resistance welding process, which may be performed by any suitable means including a resistance spot welding machine, is applied to the aluminum drive shaft 30, the steel counterweight 28, and the transition material 10 to create a flow of heat from the steel counterweight 28 to the aluminum tube drive shaft 30. This flow of heat can be metered to regulate the amount of heat generated in the steel counterweight 28 during the resistance welding process.

In Figure 1, the preferred thickness of the transition material 10 is approximately 0.050 inches, in order to achieve exceptionally good weldability and weld integrity. As such, in order to provide proper heat balance between the relatively thin transition material 10 and the relatively thick attached steel counterweight 28, shown in Figure 2, one or more geometric shapes 24, such as hemispheres, dimples, or annular rings, may be formed, projecting outwardly, on the transition material 10. The geometric shape 24 projects outwardly on the steel surface 14 of the transition material 10, as illustrated in Figure 1. The geometric shape 24 concentrates the heat generation in the steel counterweight 28 at the steel surface 14 and improves the heat balance during the resistance welding process, preventing excess heat from being transmitted to the aluminum drive shaft 30. The geometric shape 24 may be any of a variety of shapes, depending on the weight and size of the steel counterweight 28 to be attached to the aluminum drive shaft 30.

Figure 2 is an exploded view of the layers which form the transition material 10. In Figure 2, the transition material 10 is positioned such that the surface 12 will contact an outer surface 32 of the aluminum drive shaft 30, in order to create an aluminum-aluminum bond between the aluminum drive shaft 30 and the first surface 12 of the transition material 10, from heat lost during the resistance welding process. Likewise, the surface 14 will contact an inner surface 34 of the steel counterweight 28 in order to create a steel-steel bond between the steel counterweight 28 and the second surface 14 of the transition material 10, from heat generated in the steel counterweight 28 during the resistance welding process. The geometric shape 24 projects outwardly from surface 14 of transition material 10, toward the steel counterweight 28, to concentrate heat generation in the steel counterweight 28 at the steel-steel interface during the resistance welding process.

In the illustrated embodiments, an aluminum to steel transition material 10 is used to attach steel counterweights 28 to aluminum drive shafts 30 through resistance projection welding. The transition material 10 is disposed between the outer surface 32 of the aluminum drive shaft 30 and the inner surface 34 of the steel counterweight 28. The surface 12 of the transition material 10 adjacent to the drive shaft 30 is aluminum, and the counterweight 28 is steel. However, the transition material may comprise other combinations of materials.

The counterweight 28, the transition material 10, and the drive shaft 30 are subjected to a resistance welding process. During such welding, heat generated in the steel counterweight 28 forms a steel-steel bond between the counterweight 28 and the surface 14 of the transition material 10. Heat lost from this weld is conducted into the aluminum, forming an aluminum-aluminum bond between the drive shaft 30 and the surface 12 of the transition material 10 adjacent to the drive shaft 30. The plurality of geometric shapes 24 may be formed on the surface 14 of the transition material 10 adjacent to the counterweight, to localize the application of heat to the transition material 10 and prevent excess heat from being transmitted to the aluminum drive shaft 30, so as to prevent undesirable melting.

Having described the invention in detail and by reference to the preferred embodiment thereof, it will be apparent that other modifications and variations are possible without departing from the scope of the invention defined in the appended claims.

## Claims

1. A metallic composite adapted for attachment to an aluminum drive shaft (32) for imparting mechanical balance to said aluminum drive shaft (32) during rotation thereof, the composite comprising a steel counterweight (28) and a transition material (10) for disposition between the aluminum drive shaft (32) and the counterweight (28), characterised in that the transition material (10) comprises a laminate structure having a first, aluminum surface (12) to be placed against the aluminum drive shaft (32), and a second, steel surface (14) to be placed against the steel counterweight (28), and in which there are provided one or more intermediate laminate regions (20, 18) between the aluminum surface (12) and the steel surface (14).

2. A metallic composite as claimed in claim 1, further comprising:
means for creating an aluminum-aluminum bond between the aluminum drive shaft (32) and the first surface (12) of the transition material (10) from heat lost during a resistance welding process; and
means for creating a steel-steel bond between the steel counterweight (28) and the second surface (14) of the transition material (10) from heat generated in the steel counterweight (28) during a resistance welding process.

3. A metallic composite as claimed in claim 1 or 2, further comprising a plurality of outwardly projecting geometric shapes on the second surface (14) of the transition material (10) to prevent excess heat from being transmitted to the aluminum drive shaft (32).

4. A metallic composite as claimed in claim 2 or claim 3 when appendant to claim 2, wherein the resistance welding process creates a flow of heat.

5. A metallic composite as claimed in claim 4 further comprising means for metering the flow of heat from the steel counterweight (28) to said aluminum drive shaft (32).

6. A metallic composite as claimed in any one of the preceding claims when appendant to claim 2, wherein the resistance welding process comprises means for eliminating expulsion from the aluminum drive shaft (32) and the first surface (12) of the transition material (10).

7. A metallic composite as claimed in any one of the preceding claims when appendant to claim 2, wherein the resistance welding process comprises means for minimizing expulsion from the steel counterweight (28) and the second surface of the transition material.

8. A method of balancing an aluminum drive shaft (32), the aluminum drive shaft (32) having an outer surface facing radially away from an axis about which said aluminum drive shaft rotates, the method comprising the steps of:
providing a steel counterweight (28);
disposing a transition material (10) between the outer surface of the aluminum drive shaft (32) and an inner surface of the steel counterweight (28); and
applying a resistance welding process to the aluminum drive shaft (32), the steel counterweight (28), and the transition material (10) to resistance weld the inner surface of the steel counterweight (28) to the outer surface of the aluminum drive shaft (32), characterised in that the transition material has a first surface (12) adjacent to the aluminum drive shaft (32) and a second surface (14) adjacent to the steel counterweight (28), the first surface being aluminum and the second surface being steel.

9. A method as claimed in claim 8 further comprising the steps of:
creating an aluminum-aluminum bond between the aluminum drive shaft (32) and the first surface (12) of the transition material (10) from heat lost during the step of applying a resistance welding process; and
creating a steel-steel bond between the steel counterweight (28) and the second surface (14) of the transition material (10) from heat generated in the steel counterweight (28) during the step of applying a resistance welding process.

10. A method as claimed in claim 8 or 9 further comprising the step of forming a plurality of outwardly projecting geometric shapes (24) on the second surface (14) of the transition material (10) to prevent excess heat from being transmitted to the aluminum drive shaft (32).

11. A method as claimed in any one of claims 8 to 10, wherein the step of applying a resistance welding process further comprises the step of creating a flow of heat.

12. A method as claimed in claim 11 further comprising the step of metering the flow of heat from the steel counterweight (28) to the aluminum drive shaft (32).

13. A method as claimed in any one of claims 8 to 12, wherein the step of applying a resistance welding process further comprises the step of eliminating expulsion from the aluminum drive shaft (32) and the first surface (12) of the transition material (10).

14. A method of balancing an aluminum drive shaft (32) as claimed in any one of claims 8 to 13, wherein the step of applying a resistance welding process further comprises the step of minimizing expulsion from the steel counterweight (28) and the second surface (14) of the transition material (10).

15. An aluminium drive shaft (32) comprising a metallic composite (10, 28) as claimed in any one of claims 1 to 7.

## Patentansprüche

1. Metallisches Verbundmaterial zur Befestigung an einer Aluminiumantriebswelle (32), um diese während ihrer Rotation mechanisch auszuwuchten, wobei das Verbundmaterial ein Stahlgegengewicht (28) und ein Übergangsmaterial (10) aufweist zur Anordnung zwischen der Aluminiumantriebswelle (32) und dem Gegengewicht (28), **dadurch gekennzeichnet,** daß das Übergangsmaterial (10) eine Laminat-Struktur hat mit einer ersten Aluminiumoberfläche (12) zur Anordnung gegen die Aluminiumantriebswelle (32), und einer zweiten Stahloberfläche (14) zur Anordnung gegen das Stahlgegengewicht (28), und daß eine oder mehr Laminat-Zwischenbereiche (20, 18) vorgesehen sind zwischen der Aluminiumoberfläche (12) und der Stahloberfläche (14).

2. Metallisches Verbundmaterial nach Anspruch 1, **gekennzeichnet durch** Einrichtungen zur Schaffung einer Aluminium-Aluminium-Bindung zwischen der Aluminiumantriebswelle (32) und der ersten Oberfläche (12) des Übergangsmateriales (10) aus dem Wärmeverlust während eines Widerstands-Schweißprozesses;
sowie durch Einrichtungen zum Schaffen einer Stahl-Stahl-Bindung zwischen dem Stahlgegengewicht (28) und der zweiten Oberfläche (14) des Übergangsmateriales (10) aus der Wärme, die im Stahlgegengewicht (28) während des Widerstands-Schweißprozesses erzeugt wird.

3. Metallisches Verbundmaterial nach Anspruch 1 oder 2, **gekennzeichnet durch** eine Mehrzahl von nach außen vorstehenden geometrischen Formen an der zweiten Oberfläche (14) des Übergangsmateriales (10), um zu verhindern, daß übermäßige Wärme auf die Aluminiumantriebswelle (32) übertragen wird.

4. Metallisches Verbundmaterial nach Anspruch 2 oder Anspruch 3, **dadurch gekennzeichnet,** daß durch den Widerstands-Schweißprozeß ein Wärmefluß erzeugt wird.

5. Metallisches Verbundmaterial nach Anspruch 4, **gekennzeichnet durch** Einrichtungen zum Bemessen des Wärmeflusses vom Stahlgegengewicht (28) zur Aluminiumantriebswelle (32).

6. Metallisches Verbundmaterial nach einem der vorhergehenden Ansprüche, soweit diese auf Anspruch 2 bezogen sind, **dadurch gekennzeichnet,** daß der Widerstands-Schweißprozeß Mittel umfaßt, um einen Ausstoß aus der Aluminiumantriebswelle (32) und der ersten Oberfläche (12) des Übergangsmateriales (10) zu eliminieren.

7. Metallisches Verbundmaterial nach einem der vorhergehenden Ansprüche, soweit diese auf Anspruch 2 bezogen sind, **dadurch gekennzeichnet,** daß der Widerstands-Schweißprozeß Mittel umfaßt, um einen Ausstoß aus dem Stahlgegengewicht (28) und der zweiten Oberfläche des Übergangsmateriales zu minimieren.

8. Verfahren zum Ausgleichen einer Aluminiumantriebswelle (32), welche eine äußere Oberfläche hat, die radial weg von einer Achse gerichtet ist, um welche die Aluminiumantriebswelle rotiert, wobei ein Stahlgegengewicht (28) bereitgestellt wird, ein Übergangsmaterial (10) zwischen der äußeren Oberfläche der Aluminiumantriebswelle (32) und einer inneren Oberfläche des Stahlgegengewichtes (28) angeordnet wird sowie ein Widerstands-Schweißprozeß auf die Aluminiumantriebswelle (32), das Stahlgegengewicht (28) und das Übergangsmaterial (10) angewandt wird, um die innere Oberfläche des Stahlgegengewichtes (28) mit der äußeren Oberfläche der Aluminiumantriebswelle (32) zu verschweißen, **dadurch gekennzeichnet,** daß das Übergangsmaterial eine erste Oberfläche (12) angrenzend an die Aluminiumantriebswelle (32) sowie eine zweite Oberfläche (14) angrenzend an das Stahlgegengewicht (28) aufweist, und daß die erste Oberfläche Aluminium und die zweite Oberfläche Stahl ist.

9. Verfahren nach Anspruch 8, **dadurch gekennzeichnet,** daß eine Aluminium-Aluminium-Bindung zwischen der Aluminiumantriebswelle (32) und der ersten Oberfläche (12) des Übergangsmateriales (10) geschaffen wird aus dem Wärmeverlust während der Ausführung des Widerstands-Schweißprozesses, daß ferner eine Stahl-Stahl-Bindung zwischen dem Stahlgegengewicht und der zweiten Oberfläche (14) des Übergangsmateriales (10) geschaffen wird aus der Wärme, welche im Stahlgegengewicht (28) während der Ausführung des Widerstands-Schweißprozesses erzeugt wird.

10. Verfahren nach Anspruch 8 oder 9, **dadurch gekennzeichnet,** daß eine Mehrzahl von nach außen vorragenden geometrischen Formen (24) an der zweiten Oberfläche (14) des Übergangsmateriales (10) geschaffen wird, um zu verhindern, daß übermäßige Wärme auf die Aluminiumantriebswelle (32) übertragen wird.

11. Verfahren nach einem der Ansprüche 8 - 10, **dadurch gekennzeichnet,** daß durch den Widerstands-Schweißprozeß ein Wärmefluß erzeugt wird.

12. Verfahren nach Anspruch 11, **dadurch gekennzeichnet,** daß der Wärmefluß vom Stahlgegengewicht (28) zur Aluminiumantriebswelle (32) bemessen wird.

13. Verfahren nach einem der Ansprüche 8 - 12, **dadurch gekennzeichnet,** daß bei der Ausführung des Widerstands-Schweißprozesses ein Ausstoß aus der Aluminiumantriebswelle (32) und der ersten Oberfläche (12) des Übergangsmateriales (10) eliminiert wird.

14. Verfahren nach einem der Ansprüche 8 - 13, **dadurch gekennzeichnet,** daß beim Ausführen des Widerstands-Schweißprozesses ein Austreiben aus dem Stahlgegengewicht (28) und der zweiten Oberfläche (14) des Übergangsmateriales (10) minimiert wird.

15. Aluminiumantriebswelle (32), **gekennzeichnet durch** ein metallisches Verbundmaterial (10, 28) nach einem der Ansprüche 1 - 7.

## Revendications

1. Composé métallique conçu pour la fixation à un arbre d'entraînement en aluminium (32) pour conférer un équilibre mécanique audit arbre d'entraînement en aluminium (32) pendant la rotation de celui-ci, le composé comprenant un contre-poids en acier (28) et un matériau de transition (10) pour la disposition entre l'arbre d'entraînement en aluminium (32) et le contre-poids (28), caractérisé en ce que le matériau de transition (10) comprend une structure laminée comportant une première surface en aluminium (12) à placer contre l'arbre d'entraînement en aluminium (32) et une deuxième surface en acier (14) à placer contre le contre-poids en acier (28), et dans lequel sont prévues une ou plusieurs régions laminées intermédiaires (20, 18) entre la surface en aluminium (12) et la surface en acier (14).

2. Composé métallique selon la revendication 1, comprenant en outre :
un moyen pour créer un lien aluminium-aluminium entre l'arbre d'entraînement en aluminium (32) et la première surface (12) du matériau de transition (10) par la chaleur perdue pendant un procédé de soudage par résistance: et
un moyen pour créer un lien acier-acier entre le contre-poids en acier (28) et la deuxième surface (14) du matériau de transition (10) par la chaleur produite dans le contre-poids en acier (28) pendant un procédé de soudage par résistance.

3. Composé métallique selon la revendication 1 ou 2, comprenant en outre une pluralité de formes géométriques faisant saillie vers l'extérieur sur la deuxième surface (14) du matériau de transition (10) pour empêcher que de la chaleur excédentaire soit transmise à l'arbre d'entraînement en aluminium (32).

4. Composé métallique selon la revendication 2 ou la revendication 3, lorsqu'elle dépend de la revendication 2, dans lequel le procédé de soudage par résistance crée un flux de chaleur.

5. Composé métallique selon la revendication 4, comprenant en outre un moyen pour mesurer le flux de chaleur du contre-poids en acier (28) audit arbre d'entraînement en aluminium (32).

6. Composé métallique selon l'une des revendications précédentes, lorsqu'elle dépend de la revendication 2, dans lequel le procédé de soudage par résistance comprend un moyen pour éliminer l'expulsion de l'arbre d'entraînement en aluminium (32) et de la première surface (12) du matériau de transition (10).

7. Composé métallique selon l'une des revendications précédentes, lorsqu'elle dépend de la revendication 2, dans lequel le procédé de soudage par résistance comprend un moyen pour minimiser l'expulsion du contre-poids en acier (28) et de la deuxième surface du matériau de transition.

8. Procédé d'équilibrage d'un arbre d'entraînement en aluminium (32), l'arbre d'entraînement en aluminium (32) ayant une surface extérieure orientée radialement au loin de l'axe autour duquel ledit arbre d'entraînement en aluminium tourne, le procédé comprenant les étapes consistant à :
réaliser un contre-poids en acier (28);
disposer un matériau de transition (10) entre la surface extérieure de l'arbre d'entraînement en aluminium (32) et une surface intérieure du contre-poids en acier (28): et
appliquer un procédé de soudage par résistance à l'arbre d'entraînement en aluminium (32), au contre-poids en acier (28) et au matériau de transition (10) pour souder par résistance la surface intérieure du contre-poids en acier (28) à la surface extérieure de l'arbre d'entraînement en aluminium (32), caractérisé en ce que le matériau de transition a une première surface (12) adjacente à l'arbre d'entraînement en aluminium (32) et une deuxième surface (14) adjacente au contre-poids en acier (28), la première surface étant en aluminium et la deuxième surface étant en acier.

9. Procédé selon la revendication 8, comprenant en outre les étapes consistant à :
créer un lien aluminium-aluminium entre l'arbre d'entraînement en aluminium (32) et la première surface (12) du matériau de transition (10) par la chaleur perdue pendant l'étape consistant à appliquer un procédé de soudage par résistance; et
créer un lien acier-acier entre le contre-poids en acier (28) et la deuxième surface (14) du matériau de transition (10) par la chaleur produite dans le contre-poids en acier (28) pendant l'étape consistant à appliquer un procédé de soudage par résistance.

10. Procédé selon la revendication 8 ou 9, comprenant en outre l'étape consistant à réaliser plusieurs formes géométriques (24) en saillie vers l'extérieur sur la deuxième surface (14) du matériau de transition (10) pour empêcher qu'une chaleur excédentaire soit transmise à l'arbre d'entraînement en aluminium (32).

11. Procédé selon l'une des revendications 8 à 10, dans lequel l'étape consistant à appliquer un procédé de soudage par résistance comprend en outre l'étape consistant à créer un flux de chaleur.

12. Procédé selon la revendication 11, comprenant en outre l'étape consistant à mesurer le flux de chaleur du contre-poids en acier (28) à l'arbre d'entraînement en aluminium (32).

13. Procédé selon l'une des revendications 8 à 12, dans lequel l'étape consistant à appliquer un procédé de soudage par résistance comprend en outre l'étape consistant à éliminer l'expulsion de l'arbre d'entraînement en aluminium (32) et de la première surface (12) du matériau de transition (10).

14. Procédé d'équilibrage d'un arbre d'entraînement en aluminium (32) selon l'une des revendications 8 à 13, dans lequel l'étape consistant à appliquer un procédé de soudage par résistance comprend en outre l'étape consistant à minimiser l'expulsion du contre-poids en acier (28) et de la surface surface (14) du matériau de transition (10).

15. Arbre d'entraînement en aluminium (32) comprenant un composé métallique (10, 28) selon l'une des revendications 1 à 7.
